# EUROPEAN PATENT APPLICATION

(11) **EP 4 429 169 A1**
(43) Date of publication of application: **11.09.2024**
(21) Application number: 23161262.3
(22) Date of filing: 10.03.2023
(51) Int. Cl.: H04L 9/32, H04L 9/00

(54) **METHOD OF PROVIDING ONE OF MULTIPLE FILES HAVING DIFFERENT FILE FORMATS AND EACH REPRESENTING A SAME DIGITAL ASSET**

(71) Applicant: Siemens Aktiengesellschaft, 80333 München (DE)
(72) Inventor: Prummer, Michael, 80639 München (DE); Regnath, Emanuel, 81249 München (DE); Singh, Saurabh Narayan, 81739 München (DE)
(74) Representative: Siemens Patent Attorneys

(57) **Abstract**

A method of providing one (41) of multiple files (4) having different file formats representing a same digital asset (3) from a transmitting entity (2) to a receiving entity (51) comprises: transferring the one file (41) and an ownership proof (91) from the transmitting entity (2) to the receiving entity (51); and the transmitting entity (2) identifying itself to the receiving entity (51) as owner of the digital asset (3) using the ownership proof (91-93) and a non-fungible token (8) that is bound to: a cryptographic root hash (81) of a Merkle tree (9) formed based on cryptographic hashes of the multiple files (4); and a perceptual hash (82) calculated using at least one of the files (4). The ownership proof (91) comprises at least portions of the Merkle tree (9) sufficient for calculating the cryptographic root hash (81) based on a cryptographic hash of the transferred file (41).

## Description

The present invention relates to the field of industry 4.0, in which different entities having limited mutual trust are co-operating in an industrial control and communications system, and, more particularly, to a computer-implemented method of providing one of multiple files having different file formats and each representing a same digital asset from a transmitting entity to a receiving entity, and to a corresponding computer program product, manufacturing apparatus, and communication system.

A non-fungible token is a cryptographically unique, indivisible, non-replaceable, and verifiable token which represents a digital asset in a distributed transactional database, such as for example the Ethereum blockchain. A non-fungible token can be used as a proof of entitlement to the digital asset which it represents. Entitlement may include ownership, licensee status, and the like. The conditions for transferring a non-fungible token and the entitlement certified thereby between entities is governed by an automated smart contract that is stored as a transaction in the distributed transactional database and that tracks ownership of the non-fungible token. Moreover, the non-fungible token represents the digital asset (is bound to the digital asset) by being bound to a cryptographic hash of a digital file representing the digital asset. Thus, the non-fungible token can also be used for integrity verification on digital files that represent the digital asset, and for counterfeit detection on digital files that purportedly represent the digital asset.

In an industrial context, a non-fungible token can be used as a digital twin that represents a physical or a digital entity such as an Internet-of-Things device, a technical design or model, a manufacturing specification and the like, which is to be exchanged, delivered, shipped or the like in an automated and trusted manner, between different parties in an industrial ecosystem, wherein the parties have limited trust in each other. Herein, as well, the non-fungible token can be used for integrity verification, counterfeit detection, and proof of entitlement.

However, in an industrial context, a scenario is conceivable in which a digital asset, such as a CAD design, exists in multiple different file formats, such as several different vector-based formats, like DWG and DXF, and several different pixel-based formats, such as PNG and JPG, potentially each rendered in several different pixel resolutions, each of which represent the same digital asset. Different entities in the ecosystem may require respective different file format representations of the same digital asset for their operation.

If a respective non-fungible token is created for each of the individual file format representations, there is no longer a unique proof of ownership for the digital asset, but there would be rather multiple competing proofs of ownership.

It is conceivable to bundle the multiple files having multiple file formats into a folder, such as a ZIP folder, and create a single non-fungible token for the entire folder. However, in this case, a party wishing to perform any kind of verification using the non-fungible token would need to have access to the contents of the entire folder, i.e. to all of the multiple files, in order to calculate is cryptographic hash value. Verification would not be possible on the level of the individual files having different file formats but representing the same digital asset.

It is one object of the present invention to improve the providing of security of and trust in digital assets using non-fungible tokens in a case where a digital asset is represented by multiple files having different file formats.

According to a first aspect, a computer-implemented method of providing one of multiple files having different file formats and each representing a same digital asset from a transmitting entity to a receiving entity comprises: a) transferring the one file from the transmitting entity to the receiving entity; b) transferring an ownership proof for the transferred file from the transmitting entity to the receiving entity; and c) the transmitting entity identifying itself to the receiving entity as being the owner of the digital asset represented by the transferred file using the transferred ownership proof and a non-fungible token that is stored in a distributed transactional database and that represents the digital asset. Herein, the non-fungible token is bound to: a cryptographic root hash of a Merkle tree formed based on cryptographic hashes of each of the multiple files; and a perceptual hash calculated using at least one of the multiple files. Herein, the ownership proof comprises at least portions of the Merkle tree that are sufficient for calculating the cryptographic root hash based on a cryptographic hash of the transferred file.

The proposed method proposes a specific structure of the non-fungible token which, together with the proposed ownership proof, advantageously enables ownership verification, integrity verification and counterfeit detection for digital assets that are represented by multiple files having different file formats, when only an arbitrary one file of said multiple files is transferred from a transmitting entity to a receiving entity.

Herein, an amount of data that needs to be stored in the distributed transactional database may be kept at a minimum. I.e. said amount of data may merely comprise the typographical root hash and the perceptual hash. Furthermore, thanks to the cryptographic root hash of the Merkle tree formed based on cryptographic hashes of the multiple please, the non-fungible token can be used to verify integrity of any one of the multiple files individually, without requiring access to all of the multiple files, but merely based on a sparse ownership proof that needs to comprise only certain portions of the Merkle tree. Yet further, even though no cryptographic hashes of individual files are bound to the non-fungible token, counterfeit detection - i.e., the detecting of duplicate non-fungible tokens referring to the same digital asset - is possible at various stages thanks to the perceptual hash. Furthermore, the perceptual hash may advantageously provide superior counterfeit detection performance.

In particular, the distributed transactional database may maintain a cryptographically secured ledger of transactional data. For example, the cryptographically secured ledger may be a chain of blocks, wherein each block comprises a number of transactions, a cryptographic proof, such as a proof of work or a proof of stake, and a cryptographic hash value of the preceding block. In this way, later modifications of the ledger may become impossible or prohibitively expensive in term of required computing power.

Furthermore, the distributed transactional database may be embodied by a plurality of node devices interconnected by a network. Different node device may be operated by different industrial parties having limited trust in each other. Each node device may store a complete copy of the ledger. A consensus scheme may be used to govern the addition of new transactions to the ledger while securing integrity of the ledger, thus keeping the different copies of the ledger stored on the different node devices consistent with each other. The consensus scheme may be designed such that consistent behavior of each of the node device is rewarded, while inconsistent behavior of individual node devices is penalized and/or made impossible. Proof-of-Work and Proof-of-Stake are two well-known consensus schemes which ensure that no individual party can manipulate the cryptographically secured ledger without colluding with at least more than 50 % of the computing power and/or staked value that is invested into the distributed transactional database.

Thus, the distributed transactional database may also be referred to as being a Blockchain.

The term "entity" may refer to any entity that is capable of performing transactions using the distributed transactional database. Examples of transactions include minting the non-fungible token; transferring ownership of the non-fungible token to a different entity; and the like.

The respective entity may own or comprise or have access to a wallet for use with the distributed transactional database. Herein, a wallet may comprise a unique identifier (wallet address) and a cryptographic public-private key pair that can be used to prove ownership of the wallet and to unlock the wallet for performing transactions.

The respective entity may comprise a node device of the distributed transactional database (may be a "full node"). Alternatively, the respective entity may only comprise the public-private key pair of the wallet (may be a "lightweight node"). Yet alternatively, an external device may be provided that is a full or lightweight node device of the distributed transactional database. Herein, the respective entity may use authenticated API calls or the like to the external device in order to access and perform transactions in the distributed transactional database.

In particular, the transmitting entity and the receiving entity may be entities of an industrial control system.

More particularly, the respective "entity" may be a unit, such as a structural or functional unit of a respective industrial control device of the industrial control system. The respective entity may operate autonomously in a fully automated manner according to a predetermined program, or may operate in an automated manner in response to operations performed by a human operator on the respective entity.

The respective entity may be implemented in hardware and/or in software. If said entity is implemented in hardware, it may be embodied as a device, e.g., as a computer or as a processor or as a part of a system, e.g. a computer system. If said entity is implemented in software it may be embodied as a computer program product, as a function, as a routine, as a program code or as an executable object.

The digital asset may be any asset that serves a technical purpose in an industrial control system. Examples of the digital asset include manufacturing specifications, automation schemes, CAD drawings, product images, acoustic samplings, and the like. A digital asset may be represented, on a computer, by one or more digital files.

Herein, the term "digital asset" may refer to the licensable and ownable meaningful content of the digital asset. That is, the "digital asset" may be described as a set of recognizable features, such as technical, visual or audial features, that distinguish the content of the digital asset. Herein, when a file representing the digital asset is rendered, such as displayed, played back, or fed to a manufacturing apparatus for automated manufacturing, or the like, said set of distinguishing features is reproduced. More precisely, no matter which of the multiple files having different file formats and representing the same digital asset is rendered, the same or highly similar distinguishing features will be reproduced.

Herein, in particular, a "hash" (hash value) of a file is a value of fixed length that is calculated by applying a hashing algorithm to the file, wherein the file comprises data of arbitrary length.

More particularly, a "cryptographic hash" is a hash value that is calculated by applying a cryptographic hashing algorithm that relies on the avalanche effect, thus ensuring that even a small change in input data leads to a vastly different hash value. Examples of cryptographic hash algorithms include MD-5 and SHA.

To the contrary, a "perceptual hash" is, in particular, a hash value that is robust against changes in the input data as long as the features that result from rendering the input data (file) remain substantially the same. pHash is an example of a perceptual hash algorithm that can be applied to multimedia files.

In particular, the "non-fungible token" may be a token that is managed by, comprised by, or stored in, a smart contract, the smart contract being a specifically programmed smart transaction that is stored in the distributed transactional database.

More particularly, for example, the non-fungible token may be a token according to one of the Ethereum standards ERC-721 and ERC-1155, however, with the modifications as described herein (i.e. being bound to a cryptographic root hash of a Merkle tree and a perceptual hash rather than to a cryptographic hash of a file).

The non-fungible token may be suitable to be used for integrity verification and/or counterfeit detection and/or proof of entitlement of any file that represents or purports to represent, or that to the contrary does not represent or purports not to represent, the digital asset that is represented by the non-fungible token.

In particular, the non-fungible token represents the digital asset by being bound to the cryptographic root hash and with the perceptual hash. Herein, "being bound to" may refer to one of the following: The non-fungible token may comprise the cryptographic root hash and the perceptual hash. That is, the cryptographic root hash and the perceptual hash may be payload data of the non-fungible token. Alternatively, the non-fungible token may comprise a link to a metadata file that comprises the cryptographic root hash and the perceptual hash. The metadata file may be stored on any device that is external to the distributed transactional database. In this case, only the link may be payload data of the non-fungible token, or the payload data of the non-fungible token may comprise the link and a cryptographic hash of the metadata file.

The transmitting entity "being the owner" of the digital asset my may that the transmitting entity is entitled to use the digital asset for at least a certain purpose; and may man that the transmitting entity has access to each of the multiple files that represent the digital asset.

It is noted that the specifics of entitlement of the transmitting entity may be specified in the non-fungible token and/or may be enforced by a smart contract that provides the non-fungible token. Furthermore, the non-fungible token may comprise a wallet address of the transmitting entity, thereby designating the transmitting entity as its owner. The transmitting entity may possess a private key that is capable of unlocking said wallet in order to prove its ownership and/or to effect transactions of the non-fungible token.

Step a) of transferring the one file from the transmitting entity to the receiving entity may refer broadly to any action that results in the receiving entity gaining at least access to said file. For example, the transmitting entity may transmit the file to the receiving entity over a wired or wireless network. Alternatively, the transmitting entity may transmit a link to an address from where the file can be obtained to the receiving entity over the wired or wireless network. Optionally, in this case, the transmitting entity may also transmit authentication information required for accessing the file via said link to the receiving entity. As yet another alternative, the link and, optionally, the authentication information, may be comprised in the non-fungible token. In this case, the transmitting entity may merely transmit an identifier of the non-fungible token to the receiving entity, and the receiving may then obtaining the link and, optionally, the authentication information, from the non-fungible token and may, optionally, fetch the file using the link and, optionally, the authentication information.

Likewise, step b) of transferring the ownership proof from the transmitting entity to the receiving entity may refer broadly to any action that results in the receiving entity gaining at least access to said ownership proof, such as transmission over a wired or wireless network, and the like.

In particular, step c) of the transmitting entity identifying itself to the receiving entity as being the owner of the digital asset may provide one or more of: identity verification of the transmitting entity based on ownership of the non-fungible token; integrity verification of the transmitted file based on the cryptographic root hash; and counterfeit detection of duplicate non-fungible tokens based on the perceptual hash.

In particular, the Merkle tree may be a hash tree in which every "leaf" or "bottom" node (each node at a bottommost layer) comprises a cryptographic hash of one of the files, and every node that is not a leaf (each node at a higher layer) comprises a cryptographic hash of the cryptographic hashes comprised by its child nodes. Herein, when assuming that the leaf nodes are bottom nodes, that is, when assuming that child nodes are arranged downwards of their parent node, the single topmost node is called the root node and comprises a cryptographic hash of its child nodes that is the cryptographic root hash.

Merely as an example, the "portions of the Markle tree that are sufficient for calculating the cryptographic root hash based on a cryptographic hash of the transferred file" may include the cryptographic root hash of all other ones of the multiple files that have not been transferred. However, other selections of portions of the Merkle tree are conceivable as well, as will be discussed for specific embodiments.

In this way, the receiving entity can advantageously perform an integrity validation on the transferred file by calculating the cryptographic hash value of the transferred file; recalculating the cryptographic root hash value using the cryptographic hash value of the transferred file and the portions of the Merkle root tree comprised in the ownership proof; and comparing the recalculated cryptographic root hash to the cryptographic root hash that is bound to the non-fungible token.

That is, thanks to the sufficient portions of the Merkle tree being comprised in the transferred ownership proof the receiving entity may perform integrity verification on the received file, even though the non-fungible token does not specify a cryptographic hash of the individual received file, but only the cryptographic root hash of the Merkle tree.

It is noted herein that forging the ownership proof (that is, guessing hashes of a Merkle tree that lead to the correct cryptographic root hash) by a malicious third party that does not have access to the multiple files may be computationally prohibitively difficult or impossible.

The perceptual hash, unlike the cryptographic hashes, is a hash that is expected to be the same or similar independent on which of the multiple files it is calculated from. As such, the perceptual hash may be calculated using any one or more of the multiple files.

The perceptual hash can be advantageously used for counterfeit detection, i.e. for detecting duplicate non-fungible tokens representing the same digital asset. It is not important whether the counterfeit detection is being performed as part of the method, such as step c). Even if the counterfeit detection is performed only at a later time, such as periodically during maintenance of the distributed transactional database or the like, the presence of the perceptual hash in the non-fungible token increases a level of trust in the non-fungible token.

It is noted that steps a) to c) do not necessarily need to be performed in this order and can also be performed in reversed or any other order and/or simultaneously, depending on further details of implementation.

According to a variant of the first aspect, the ownership proof further comprises at least an identifier of the non-fungible token.

An identifier of the non-fungible token may comprise a cryptographic address of a smart contract that identifies the smart contract in the ledger of the distributed transactional database; and a token id of the specific non-fungible token inside the smart contract.

In this way, the receiving entity is made aware of the non-fungible token to use for performing step c).

However, the present variant is optional; alternatively, for example, the receiving entry may retrieve the non-fungible token to use for performing step c) from the distributed transactional database by searching the distributed transactional database based on the perceptual hash of the transferred file, for example.

According to an embodiment, the receiving entity rejects the received file if the identification in step c) fails.

When the identification in step c) fails, the received file cannot be trusted. It may be compromised and/or the transmitting entity may not be authorized to provide the received files. Therefore, by rejecting the received file in case of a failed identification using the non-fungible token, trust and security of an industrial control system comprising the transmitting entity and the receiving entity can be increased.

Rejecting the received file may comprise deleting the received file, forgetting or discarding the link and/or authentication information with which the file can be accessed, not using the received file for further processing, alerting a human operator to the received file and leave a decision on what to do with it to the human operator, returning a message indicating rejecting to the transmitting entity, and the like.

According to a further embodiment, the perceptual hash is an average of perceptual hashes of each of the multiple files.

Even though the multiple files having different file formats represent the same digital asset, due to differences in the file format, which may result in differences of precision and the like, the perceptual hashes of the different files may not be identical, but may be only similar. In this case, setting the perceptual hash of the non-fungible-token to an average value may advantageously result in more accurate results during later comparisons between the perceptual hash of the non-fungible tokens with perceptual hashes calculated from actual files during counterfeit detection and the like. According to a further embodiment, step c) comprises: the receiving entity confirming an identity of the transmitting entity as being the owner of the non-fungible token; the receiving entity confirming an integrity of the transmitted file as being one of the multiple files representing the digital asset that is represented by the non-fungible token; and failing the identification in step c) if at least one of said confirming steps fails.

The receiving entity may confirm the integrity of the transmitted file as being one of the multiple files represented by the digital asset that is represented by the non-fungible token using the non-fungible token and the transferred ownership proof by: calculating the cryptographic root hash of the received file; calculating the cryptographic root hash of the Merkle tree from the cryptographic hash of the received file and the portions of the Merkle tree comprised in the transferred ownership proof; and comparing the calculated cryptographic root hash of the Merkle tree with the cryptographic root hash of the Merkle tree that is bound to the non-fungible token.

The receiving entity may confirm the identity of the transmitting entity as being the owner of the non-fungible token based on an owning wallet address that is specified by the non-fungible token, by verifying whether the transmitting entity has access to the corresponding wallet, for example.

According to a further embodiment, step c) comprises the receiving entity confirming an identity of the transmitting entity as being the owner of the non-fungible token based on one of: the transmitting entity transferring ownership of the non-fungible token to the receiving entity using a transaction in the distributed transactional database; and the transmitting entity proofing its ownership of the non-fungible token to the receiving entity using challenge-response authentication.

In the former case, the transmitting entity transfers its ownership of, or entitlement to use, the digital asset to the receiving entity and the receiving entity becomes the new owner of the non-fungible token. In this case, a consensus mechanism of the distributed transactional database ensures that the transmitting entity originally owned the non-fungible token; otherwise. If this was not the case, the transaction would not have been committed to the ledger of the distributed transactional database.

In the latter case, the challenge-response authentication may comprise, for example, verifying that a private key held by or accessible by the transmitting entity is able to unlock a wallet address specified by the non-fungible token as wallet address of its owning entity.

In either case, cryptographic mechanisms built into the distributed transactional database and its non-fungible token functionality advantageously ensure that the identity of the transmitting entity can be confirmed by the receiving entity.

That is, advantageously, using the single non-fungible token, it is possible to enforce ownership rights and other entitlements when transferring individual ones of multiple digital files that represent a same digital asset in an industrial control system or the like.

According to a further embodiment, the owner ship proof comprises, as the sufficient portions of the Merkle tree: for each layer of the Merkle tree, a cryptographic hash of each sibling node of the node that corresponds to the transmitted file on the respective layer.

Herein, a node of the Merkle tree that "corresponds to the transmitted file" is a node that has a direct child, grandchild or further descendent node which comprises the cryptographic hash of the transmitted file, and a sibling node of said node is a node that has a common parent node with said node.

Thus, it is therefore possible to minimize not only the amount of data this required to be stored such that it is bound to the non-fungible token, but also the amount of data that is required to be transferred as the sufficient portion of the Merkle tree within the ownership proof.

Given an exemplary Merkle tree that comprises n layers, the count of "n" including the layer comprising the leaves, but not including the layer that comprises the single root hash, and wherein each parent node has two child nodes. This exemplary Merle tree is able to accommodate, at its leaves, hashes of 2 ** n files, wherein "**" denotes "to the power of". If, as the sufficient portion of the Merkle tree, hashes of the other files that were not transferred are selected, the ownership proof will comprise (2 ** n) - 1 hashes. However, if the hashes to be included into the ownership proof are selected as per the present embodiment, the ownership proof needs to comprise only n hashes. This benefit becomes even more salient if the number of multiple files is large.

Furthermore, advantageously, according to the present embodiment, most of the hashes of the other ones of the multiple files that were not transmitted (hashes at the leave nodes of the Merkle tree) do not need to be disclosed to the receiving party, thus increasing data privacy and trust.

According to a further embodiment, step c) further comprises: the receiving entity calculating a perceptual hash of the file received in step a), and the receiving entity failing the identification in step c) if the distributed transactional database contains more than one non-fungible token bound to a perceptual hash that is similar to the calculated perceptual hash of the received file.

That is, the perceptual hash bound to the non-fungible token advantageously enables counterfeit detection. The receiving entity may search the distributed transactional database for non-fungible tokens being bound to similar perceptual hashes, and if there are two or more of them, the likelihood is high that one of them is a counterfeit, i.e., an illegally minted non-fungible token representing an illegit digital asset that is an illegal copy of a legit digital asset, or the like. Said counterfeit detection functionality advantageously detects counterfeits even if the underlying files representing the respective digital assets are present in different formats and/or comprise slight modifications that would significantly alter a cryptographic hash, but do not significantly alter the perceptual hash.

According to a further embodiment, the method further comprises: the receiving entity calculating a perceptual hash of the file received in step a), and, if the distributed transactional database contains exactly one non-fungible token bound to a perceptual hash that is similar to the calculated perceptual hash of the received file, using said exactly one non-fungible token by the receiving entity for the identification in step c).

In this way, it is advantageously not necessary for the owner transmitting entity to provide the receiving entity with an identifier of the non-fungible token to use for step c) as part of the ownership proof or the like. Rather, the receiving entity can determine the correct non-fungible token itself based on a comparison of the two perceptual hashes.

According to a further embodiment, the method further comprises the transmitting entity minting the non-fungible token in the distributed transactional database, wherein a consensus scheme of the distributed transactional database accepts minting of the non-fungible token on the condition that the distributed transactional database does not contain another non-fungible token bound to a perceptual hash that is similar to the perceptual hash of the non-fungible token to be minted.

Herein, "minting" a non-fungible token may comprise performing a transaction using the distributed transactional database that causes the non-fungible token to be created and to be associated with the transmitting entity as its initial owner. For example, during said "minting", a token id of a smart contract adhering to ERC-1155 may be assigned to a wallet address of a wallet of the transmitting entity. "Minting" may also comprise binding the cryptographic root hash and the perceptual hash to the newly-created token. Said step of "minting" is performed, in particular, when the transmitting entity is a creating entity that has created the digital asset and/or the multiple files representing the digital assets, and a non-fungible token representing the digital asset is not yet stored in the distributed transactional database.

Herein, advantageously, since the non-fungible token and any other previously minted non-fungible tokens comprise a respective perceptual hash, by comparing the perceptual hash of the non-fungible token to be minted with the perceptual hashes of non-fungible tokens that have already been minted in the distributed transactional database, it is possible to perform counterfeit detection. As discussed also hereinabove, counterfeits may be detected even if the underlying files are present in different formats and/or comprise slight modifications. Furthermore, since the counterfeit detection is performed as part of the consensus scheme, it is advantageously possible not only to detect counterfeited non-fungible tokens, but also to prevent their inclusion into the distributed transactional database ab initio. As such, a level of trust in the distributed transactional database is advantageously increased.

According to a further embodiment, in order to determine one or more non-fungible tokens that are stored in the distributed transactional database and that are bound to a similar perceptual hash, a trusted perceptual hash database is queried in which identifiers of the non-fungible tokens comprised in the distributed transactional database are stored in association with respective perceptual hashes of the respective non-fungible tokens.

The present embodiment is compatible with the embodiment in which the consensus scheme performs counterfeit detection and prevention during minting, in which case the trusted perceptual hash database is queried for perceptual hashes that are similar to the perceptual hash of the non-fungible token to be minted; and is also compatible with the embodiment in which the receiving entity performs counterfeit detection during step c), in which case the trusted perceptual hash database is queried for perceptual hashes that are similar to the calculated perceptual hash of the received file.

The trusted perceptual hash database may be an indexed database that uses perceptual hashes as an index. The trusted perceptual hash database may support similarity searches using wildcards, similarity measure thresholds, or the like.

By performing an indexed query to the trusted perceptual hash database, it is possible to quickly retrieve identifiers of the relevant non-fungible tokens without having to time-consumingly iterate through the ledger of the distributed transactional database. Thus, advantageously, a performance of operation may be increased.

The trusted perceptual hash database may be a predetermined database trusted by all entities. Alternatively, the trusted perceptual hash database may be accessed dynamically via an API endpoint that is provided by the smart contract that manages the non-fungible tokens. As a further alternative, each entity, such as the transmitting entity and the receiving entity, may comprise a node device of the distributed transactional database, and each entity may maintain its own perceptual hash database.

According to a further embodiment, the distributed transactional database, upon accepting minting of a non-fungible token, stores an identifier of the non-fungible token in association with the perceptual hash bound to the non-fungible token in the trusted perceptual hash database.

That is, as soon as a non-fungible token is minted, a corresponding record is stored in the trusted perceptual hash database. In this way, the trusted perceptual hash database is automatically kept up to date.

The storing of the record may be triggered by the consensus scheme of the distributed transactional database, for example.

According to a further embodiment, a decision whether the perceptual hashes are similar is made when a statistical similarity measure is lower than a predetermined threshold.

In particular, the statistical similarity measure is calculated between the perceptual hashes that are to be compared.

For example, the statistical similarity measure may be a Hamming distance, a Levenshtein distance, or the like.

Any embodiment of the first aspect may be combined with any embodiment of the first aspect to obtain another embodiment of the first aspect.

According to a further aspect, the invention relates to a computer program product comprising a program code for executing the above-described method for providing one of multiple files having different file formats and each representing a same digital asset from a transmitting entity to a receiving entity when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

Herein, respective portions of the program code may be run on the respective entities, such as the transmitting entity, the receiving entity, and the computing nodes of the distributed transactional database.

According to a further aspect, there is provided a manufacturing apparatus configured to receive a file that represents a manufacturing specification of an article to be manufactured according to the above-described method of the first aspect or any of its embodiments, wherein the manufacturing apparatus is configured to act as the receiving entity, and is further configured to manufacture the article to be manufactured only if the transmitting entity is successfully identified as the owner of a digital asset that is represented by the received file in step c).

That is, the manufacturing specification is an example of a digital asset.

Merely as an example, the manufacturing apparatus may be a 3D printer. Different file formats, such as STL and VRML, are common in 3D printing.

However, with the non-fungible token being configured as described for the first aspect, even in a heterogenous environment with several manufacturing apparatuses that work with different file formats, a single non-fungible token can be used to represent the manufacturing specification.

With the proposed manufacturing apparatus, it is advantageously possible to prevent manufacturing when an illegit manufacturing specification is received from a transmitting entity that could not be identified as its rightful owner. In this way, copyright infringements, license infringements and/or damage being caused to the manufacturing apparatus by executing a malicious or defect manufacturing specification can be avoided in an automated manner.

As in the embodiments of the first aspect, the comparison between the perceptual hashes may be performed based on a statistical similarity measure, such as a Hamming distance or a Levenshtein distance, or the like.

According to a further aspect, a communication system comprises a transmitting entity, a receiving entity and a distributed transactional database, wherein the transmitting entity and the receiving entity are configured to: a) transfer one of multiple files having different file formats and each representing a same digital asset from the transmitting entity to the receiving entity; and b) perform an identification in which the transmitting entity is identified to the receiving entity as being the owner of the digital asset represented by the transferred file using a non-fungible token that is stored in the distributed transactional database and that represents the digital asset, wherein the non-fungible token is bound to: a cryptographic root hash of a Merkle tree formed based on cryptographic hashes of each of the multiple files; and a perceptual hash calculated using at least one of the multiple files.

The embodiments and features described with reference to the method of the first aspect also apply mutatis mutandis to the communication system of the present aspect.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows an industrial control and communication system according to a first exemplary embodiment;
Fig. 2 shows a digital asset, multiple files representing the digital asset, a Merkle tree, and a non-fungible token according to the first exemplary embodiment;
Fig. 3 illustrates method steps of a method for providing one of multiple files representing a same digital asset according to the first exemplary embodiment;
Fig. 4 illustrates an ownership proof 91 according to the first exemplary embodiment;
Fig. 5 illustrates an ownership proof 93 according to the second exemplary embodiment;
Fig. 6 illustrates method stops of a method for minting a non-fungible token according to a third exemplary embodiment; and
Fig. 7 illustrates a perceptual hash database according to preferred further developments.

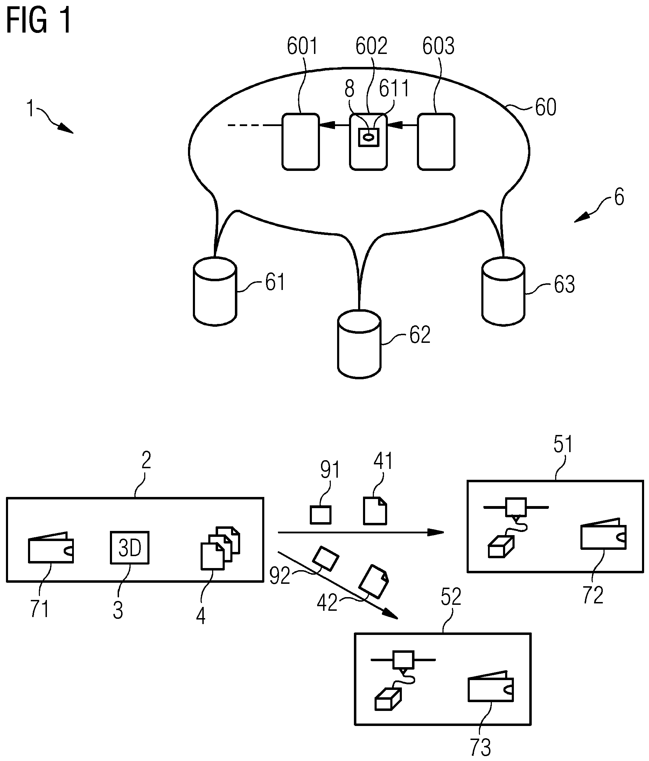

In the Figures, like reference numerals designate like or functionally equivalent elements, unless otherwise indicated. Fig. 1 shows an industrial control and communication system 1 (example of a communication system, henceforward also simply referred to as "system 1") according to an exemplary embodiment.

The system 1 implements an Industry 4.0 scenario in which various entities to be described hereinbelow are provided by different parties, such as different OEM's, that have limited trust in each other.

It will be appreciated that the entities described hereinbelow are communicatively connected using a wired or wireless network, or the like, such as to be able to transmit data, commands, remote procedure calls, and the like, between each other.

The system 1, in the present example, is an industrial manufacturing line that uses 3D printing for manufacturing.

Thus, a first entity of the system 1 is an industrial PC 2 (example of a transmitting entity). The industrial PC 2 owns a three-dimensional model 3 (example of a digital asset) of a (non-shown) product to be manufactured. The digital asset 3 has originally been prepared in a CAD program; however, the CAD program can output multiple files 4 having different formats such as STL, OBJ, VRML, FBX, COLLADA and the like, which can serve as manufacturing specifications to 3D printers such as the 3D printers 51 and 52.

The industrial control and communication system 1 further comprises the 3D printers 51 and 52 (examples of manufacturing apparatuses). Each 3D printer 51, 52 is configured to manufacture, through 3D printing, a product based on an input file containing a manufacturing specification. Since the 3D printers 51, 52 may be provided by different parties, it may occur that 3D printer 51 requires input files having a first format, such as VRML, while 3D printer 52 requires input files having a second format, such as STL, that is different from the first format.

Furthermore, the system 1 comprises a blockchain 6 (example of a distributed transactional database). The blockchain 6 is formed by a plurality of node devices 61, 62, 63. Each node device 61-63 is an industrial computing device that stores a copy of a cryptographically secured transactional ledger 60 and participates in a consensus scheme of the blockchain 6. The ledger 60 (each copy thereof) comprises a plurality of blocks 601, 602, 603. Each block 603, 602, 601 is cryptographically linked to the respective preceding block 602, 601, ... Each block 601-603 comprises a number of transactions (not shown) that have been posted to and confirmed by the blockchain 6. The consensus scheme ensures consistency of the multiple copies of the ledger 60 and ensures that transactions that are confirmed in the ledger 60 by the node devices 61-63 are legit and comply with the rules that govern operation of the blockchain 6.

The industrial PC 2 as well as the 3D printers 51, 52 each comprise a corresponding wallet 71, 72, 73. Each wallet 71-73 comprises a respective key pair, each key pair comprising a public key and a private key. The wallets 71-73 enable the entities 2, 51, 52 of the industrial control and communication system 1 to authenticate with and post and receive transactions on the ledger 60 of the blockchain 6.

In the industrial control and communication system 1 in which different entities 2, 51, 52, 61-63 are provided by different parties having limited trust in each other, the blockchain 6 enables common trust and transparency in respect of the contents of the transactions that are committed to and stored in the ledger 60 of the blockchain 6.

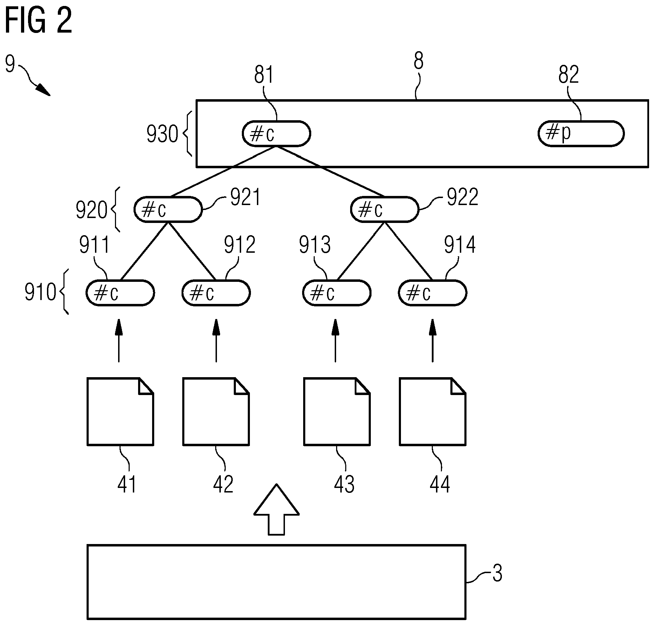

More particularly, the transactions stored in the ledger 60 of the blockchain comprise a smart contract 611 that provides a number of non-fungible tokens. A particular non-fungible token 8 is shown in Fig. 1. Non-fungible token 8 is owned by the industrial PC 2. That is, the industrial PC 2 can use the public-private key pair of its wallet 71 to assume, transfer and/or prove ownership of the non-fungible token 8. Herein, assuming (receiving) and transferring (giving away) ownership of the non-fungible token 8 is effected by committing a corresponding transaction to the ledger 60, while proving ownership can be effected either by committing a transaction to the ledger 60 or by performing a challenge-response procedure using the public-private key pair of the wallet 71 without committing any transaction to the ledger 60. Furthermore, as discussed hereinbelow with reference to Fig. 2, the non-fungible token 8 is cryptographically linked to the multiple files 4 that represent the three-dimensional model 3. As such, the non-fungible token 8 represents, in a cryptographically verifiable manner, the three-dimensional model 3. Thus, by proving that the industrial PC 2 owns the non-fungible token 8, the industrial PC 2 can also prove that it owns the three-dimensional model 3 and any of the multiple files 4 having different file formats that represent the three-dimensional model 3.

Fig. 2 shows the digital asset 3 (such as the three-dimensional model 3 of Fig. 1), multiple files 4, 41-44 representing the digital asset 3, a Merkle tree 9, and the non-fungible token 8 according to the first exemplary embodiment.

The Merkle tree 9 comprises, at its lowermost or "leaf" layer 910, a cryptographic hash 911 of the first file 41, a cryptographic hash 912 of second file 42, a cryptographic hash 913 of third file 43, and a cryptograph hash 914 of the fourth file 44.

The files 41-44 are files that each represent the digital asset 3. However, the files 41-44 differ in file format, resolution, level of detail, or the like. As such, due to an avalanche effect of cryptographic hash algorithms, their cryptographic hashes 911-914 differ vastly.

The next higher layer 920 of Merkle tree 9 comprises cryptographic hash 921, which is a cryptographic hash of a combination of the cryptographic hashes 911 and 912. Furthermore, layer 920 also comprises cryptographic hash 922, which is a cryptographic hash of a combination of the cryptographic hashes 913 and 914. The respective combination may be, for example, a juxtaposition. Looking at the Merkle tree 90 in Fig. 2, it can be said that cryptographic hash 921 is comprised by a father node of the child nodes that comprise the cryptographic hashes 911 and 912, and that cryptographic hash 922 is comprised by a father node of the child nodes that comprise the cryptographic hashes 913 and 914. Child nodes that are children of the same parent node are also called sibling nodes. So, the nodes comprise cryptographic hashes 913 and 914 are siblings. Likewise, the nodes comprising cryptographic hashes 911 and 912 are siblings.

At its topmost layer 930, Merkle tree 9 comprises the cryptographic root hash 81, which is a cryptographic hash of a combination of hashes 921 and 922. That is, the nodes comprising hashes 921 and 921 are sibling nodes, as they both are child nodes of the node comprising the cryptographic root hash 81.

As such, any entity that owns (has access to) all of the multiple files 41-44 is able to calculate all the cryptographic hashes 911-914, 921-922, 81 that comprise the Merkle tree 9, by calculating the cryptographic hashes at the leaf layer 910 from the files 41-44 and then calculating the cryptographic hashes of the further layers based thereupon.

The non-fungible token 8 is bound to the cryptographic root hash 81 of the Merkle tree 9. Furthermore, the non-fungible token 8 also is bound to a perceptual hash 82. In the present exemplary embodiment, the non-fungible token 8 comprises the cryptographic root hash 81 and the perceptual hash 82 as payload data.

The perceptual hash 82 is calculated using a perceptual hashing algorithm on at least one of the files 41-44. Since files 41-44 all represent the same digital asset 3, the perceptual hashes of the files 41-44 are expected to be the same or to be similar, i.e. a deviation between the perceptual hashes of the files 41-44 is expected to be below a predetermined threshold. In so far, it is not decisive which of the files 41-44 is used to calculate the perceptual hash 82. However, advantageously, for example, the file with the highest level of detail could be selected to calculate the perceptual hash 82. Alternatively, a perceptual hash could be calculated for each of the files 41-44, and the perceptual hash 82 that is bound to the non-fungible token 8 may be calculated as an average value of the perceptual hashes calculated for the individual files 41-44.

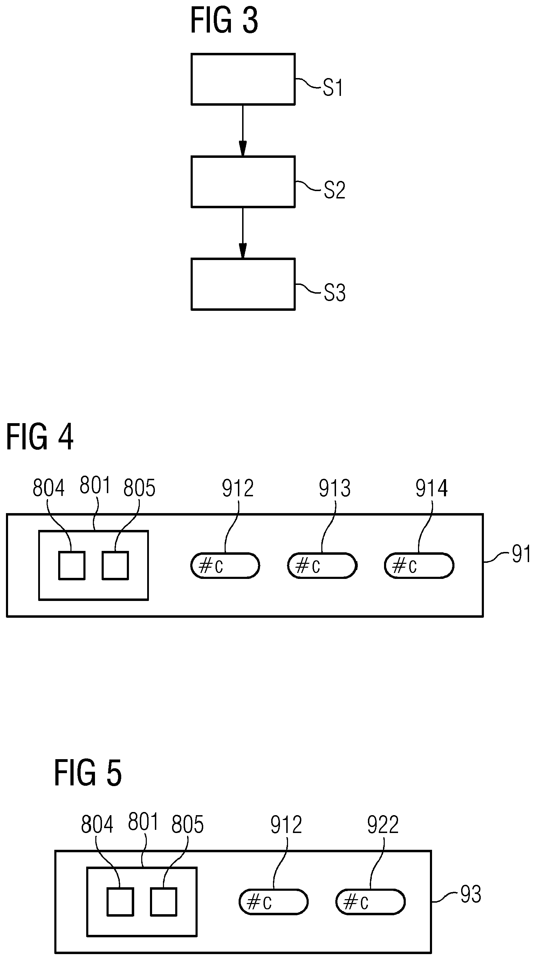

Fig. 3 illustrates method steps of a method of providing one of the multiple files 4 from a transmitting entity 2 to a receiving entity 51, 52 according to the first exemplary embodiment. Reference will be made to Fig. 1 to Fig. 3.

In step S1, when the first 3D printer 51 is to manufacture a product, the industrial PC 2 transfers file 41 representing the three-dimensional model 3 and having the required first file format to the first 3D printer 51 so as to cause the first 3D printer 51 to manufacture the product to be manufactured.

In step S2, the industrial PC 2 transfers an ownership proof 91 for file 41 to 3D printer 51.

One particular example of an ownership proof 91 according to the first exemplary embodiment that is created and transferred by the industrial P2 in step S2 is illustrated in Fig. 4. Reference is made to Fig. 1 to Fig. 4.

Ownership proof 91 comprises an identifier 801 of the non-fungible token 8 that represents the digital asset 3. The identifier 801 comprises a contract address 804 of smart contract 611 that provides a number of non-fungible tokens and a token id 805 of the specific non-fungible token 8 inside the smart contract 611. The contract address 804 is an address that enables an entity, such as the receiving entity 82, to locate smart contract 611 in the blockchain 6. The token id 805 is an identifier that unambiguously identifies the specific non-fungible token 8 that represents the digital asset 3 inside the smart contract 611.

Ownership proof 2 further comprises a list of cryptographic hashes 912, 913, 914. More specifically, in step S2, the industrial PC 2 determines the cryptographic hashes 912, 913, 914 of the other ones 42, 43, 44 of the multiple files 4 that were not transferred in step S1, and includes those cryptographic hashes 912, 913 and 914 into the hash list of the ownership proof 93.

Then, the industrial PC 2 transmits the ownership proof 91 to the 3D printer 51. The 3D printer 51 receives the ownership proof 91, uses the identifier 801 comprised in ownership proof 91 to identify the non-fungible token 8 to be used for the further step S3.

In step S3, using the non-fungible token 8 and the ownership proof 91, the industrial PC 2 is identified to the 3D printer 51 as being the entitled owner of the three-dimensional model 3 that is represented by the transferred file 41.

Herein, the 3D printer 51 (receiving entity) confirms that the industrial PC 2 (transmitting entity), owns or has owned the non-fungible token 8 at the time when transfer of file 41 was initiated. In the present example, a challenge-response authentication is performed in which the 3D printer 51 encrypts a random challenge using a public key of the industrial PC 2, which is tied to a wallet address specified in non-fungible token 8 as wallet address of an owning entity, and expects the industrial PC 2 to return a response comprising the decrypted response. The industrial PC 2 will only be able to return the requested response if it possesses the private key of its wallet 71 and if said wallet 71 is the wallet specified in the non-fungible token 8 as the wallet of the owning entity.

In this way, the 3D printer 51 performs ownership verification and confirms that the industrial PC 2 is entitled to 3D print the physical product that corresponds to the three-dimensional model 3 that is represented by the non-fungible token 8.

Furthermore, the 3D printer 51 calculates a cryptographic hash of the received file 41 (if all goes well, this should be the same value as the cryptographic hash 911 of the Merkle tree 9), obtains further portions of the Merkle tree 9 (in the specific example, cryptographic hashes 912, 913 and 914 of the leaf layer 910) from the received ownership proof 91, and re-calculates the cryptographic root hash 81 of Merkle tree 9. The 3D printer 51 then confirms that the cryptographic root hash 81 calculated in this way matches with the cryptographic root hash 81 that is bound to the non-fungible token 8. In this way, the 3D printer 51 performs integrity verification and confirms that the received filed 41 indeed represents the three-dimensional model 3 that is represented by the non-fungible token 8.

If the identification in step S3 succeeds, that is, if both the identity of the transmitting entity 2 and the integrity of the received file 41 are confirmed, there is trust in the entitlement of the industrial PC 2 to print and there is trust in the integrity of the file 41. Thus, the 3D printer 51 may proceed to print the product to be manufactured according to the three-dimensional model 3 (that is, according to the specification comprised by the received file 41). However, if the identification in step S2 fails, the 3D printer 51 rejects the received file 41 and does not proceed with printing.

Operations of and communications between the industrial PC 2 and the first 3D printer 51 have been described. In the same manner, when the second 3D printer 52 is to manufacture a product, the industrial PC 2 transfers a file 42 representing the three-dimensional model 3 and having the required second file format and a corresponding ownership proof 92 to the second 3D printer 52 to cause the second 3D printer 52 to manufacture the product to be manufactured, and uses the non-fungible token 8 and the ownership proof 92 to identify itself to the 3D printer 52 as being the entitled owner of the three-dimensional model 3 that is represented by the transferred file 42. Herein, ownership proof 92 differs from ownership proof 91 in that ownership proof 91 comprises cryptographic hashes 912, 913, 914, while ownership 92 would comprise cryptographic hashes 911, 913, 914. In all other aspects, the operations of and communications between the industrial PC 2 and the second 3D printer 52 are the same as for the industrial PC 2 and the first 3D printer 51, and their description will be omitted.

Attention is drawn to the fact that, in both cases, even though different files 41, 42 having different file formats, but representing the same three-dimensional model 3, were transferred to the different 3D printers 51, 52, the same non-fungible token 8 has been used to identify the non-fungible token 8 as the entitled owner of the three-dimensional model 3.

It is noted that a malicious entity could try to mint another, counterfeited, non-fungible token that represents the same three-dimensional model 3. The malicious entity could produce a fraudulent file having a different file format than files 41-44 and/or comprising minor modifications of files 41-44 and bind the counterfeited non-fungible token to the cryptographic hash of the fraudulent file. However, as long as the fraudulent file represents the same three-dimensional model 3, such a fraudulent file will have a perceptual hash that is the same or similar to the perceptual hash that is bound to the legit non-fungible token 8. Therefore, it is easy to detect such attempts of counterfeiting. For example, counterfeit detection may be performed by searching the ledger 60 for non-fungible tokens 8 having the same or similar perceptual hashes 82.

That is, it has been shown how the proposed structure of the single non-fungible token 8, which is bound to the root hash 81 of a Merkle tree 9 that was formed based on cryptographic hashes 911-922 of each of the multiple files 4 and to a perceptual hash 82 of at least one of the multiple files 4, advantageously enables ownership verification, integrity verification and counterfeit detection for digital assets 3 that are represented by multiple files 4 having different file formats, when only an arbitrary one file 41, 42 of said multiple files 4 is transferred from a transmitting entity 2 to a receiving entity 51, 52.

Fig. 5 illustrates an ownership proof 93 according to a second exemplary embodiment. Reference is made to Figs. 1-3 and 5.

The second exemplary embodiment is based on the first exemplary embodiment, and redundant descriptions are omitted.

The second exemplary embodiment differs from the first exemplary embodiment only in terms of the structure of the ownership proof. In step S2, rather than the ownership proof 91 illustrated in Fig. 4, the industrial PC 2 transfers an ownership proof 93 having the structure illustrated in Fig. 5 to the first or second 3D printer 51, 52.

A case is described in which the ownership proof 93 is transmitted together with the first file 41, i.e., where it replaces ownership proof 91.

Similar to ownership proof 91, the ownership proof 93 comprises the identifier 801 of the non-fungible token 8 which comprises contract address 804 and token id 805. However, the ownership proof 93 comprises a different list of hashes. In particular, the ownership proof 93 does not comprise all the cryptographic hashes 912-914 of all the non-transmitted files 42-44.

Rather, in step S3, the industrial PC 2 selects, for each layer 910, 920, 930 of the Merkle tree 9, a cryptographic hash 911-922 of each sibling node of the node on the respective layer that corresponds to the transmitted file.

That is, on the lowermost, leaf layer 910 of the Merkle tree 9, cryptographic hash 911 is stored in a node that corresponds to the transmitted file 41. Therefore, cryptographic hash 912, which is stored in a sibling node of the node storing cryptographic hash 911, is included in the ownership proof 93.

On the middle layer 920 of the Merkle tree, cryptographic hash 921 is stored in a node that corresponds to the transmitted file 41 on the middle layer 920. Cryptographic hash 921 can be calculated from cryptographic hash 911, which the receiving entity 51 will be able to calculate based on the received file 41, and from cryptographic hash 912, which is comprised in the ownership proof 93. Therefore, cryptograph hash 921 is not included in the ownership proof 93. However, cryptographic hash 922 is stored in a sibling node of the node that stores cryptographic hash 921 on the middle layer 920. Therefore, cryptographic hash 922 is included in the ownership proof 93.

On the topmost layer 930 of the Merkle tree, cryptographic root hash 81 can be calculated from calculated cryptographic hash 921 and from cryptographic hash 922, which is comprised in ownership proof 93. There are no sibling nodes on the topmost layer 930, so nothing more needs to be included in the ownership proof 93.

Thus, as can be seen by comparing Fig. 4 with Fig. 5, for the three-level Merkle tree 9 shown in Fig. 2, the ownership proof 93 according to the second exemplary embodiment is one element shorter than the ownership proof 91 according to the first exemplary embodiment but is still sufficient for calculating the cryptographic root hash 81.

The benefits of composing the ownership proof 93 as per the teaching of the second exemplary embodiment are more expressed when there are larger numbers of files 4 and the Merkle tree comprises more than three levels. The required size (length of hash list) of the ownership proof 91 grows exponentially with the number of levels or linearly with the number or files 4, while the required size of ownership proof 93 grows only linearly with the number of levels or logarithmically with the number of files 4.

Furthermore, ownership proof 93 advantageously increases data security and makes forging more difficult by not disclosing most of the perceptual hashes 911-914 of the multiple files 41-44. That is, perceptual hashes 911, 913 and 914 are not disclosed in ownership proof 93.

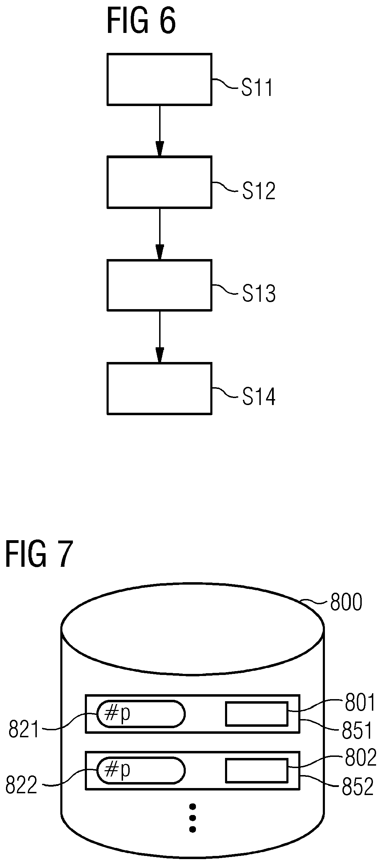

Fig. 6 shows steps of a method of minting a non-fungible token according to a third exemplary embodiment. Reference is made to Fig. 6, Fig. 1 and Fig. 2.

The third exemplary embodiment pertains to a case in which an entity has created a digital asset 3 that has not yet been claimed in the blockchain 6.

The method steps of the third exemplary embodiment can be combined with the method steps of the first or secondary exemplary embodiment. For example, the industrial PC 2 can first mint the non-fungible token 8 for its digital asset 3 according to the method steps of the third exemplary embodiment and then proceed with providing one of the files 4 to a 3D printer 51, 52 using the minted non-fungible token 8 according to the method steps of the first or second exemplary embodiment.

In step S11, entity 2, such as industrial PC 2, exports the digital asset 3 into a plurality of different file formats. Thus, the plurality of files 4 having different file formats representing the same digital asset 3 are obtained.

In step S12, entity 2 calculates the cryptographic hashes 911-914 of the multiple files 4 using a cryptographic hash function, such as SHA-256, and calculates the further cryptographic hashes 921, 922 of the further layers 920, 930 of the Merkle tree 9 until the cryptographic root hash 81 is obtained.

In step S13, entity 2 calculates perceptual hashes of the multiple files 4 and calculates the perceptual hash 82 to be an average value of the calculated perceptual hashes.

In step S14, entity 2 uses its wallet 71 to perform a transaction with smart contract 611 to cause the minting of the non-fungible token 8. During the minting, the token ID (805 in Fig. 4) of the non-fungible token 8 becomes associated with the wallet 71 of entity 2. Entity 2 then binds the cryptographic root hash 81 and the perceptual hash 82 to the non-fungible token 8.

To perform said binding, according to one variant, entity 2 stores the cryptographic root hash 81 and the perceptual hash 82 as payload data inside the non-fungible token 8. According to another variant of binding, entity 2 creates a JSON file for metadata, stores the cryptographic root hash 81 as key-value pair in the JSON file, stores the perceptual hash 82 as key-value pair in the JSON file, optionally adds further information, such as download addresses for the multiple files 4, further portions of Merkle tree 9, and the like, to the JSON file, uploads the JSON file to a file server or a cloud, such as an InterPlanetary File System (IPFS) and stores a URI from where to obtain the JSON file as payload data inside the non-fungible token 8.

According to the third exemplary embodiment, starting from a single, same digital asset 3, a single non-fungible token 8 has been created that represents the multiple files 4 having different formats which represent the digital asset 3. The single non-fungible token 8 comprises the cryptographic root hash 81 and the perceptual hash 82. Thus, the non-fungible token 8 enables ownership verification, integrity verification and counterfeit detection for any of the multiple files 4 that represent the digital asset 3.

Fig. 7 illustrates a perceptual hash database 800 according to preferred further developments. Reference is made to Fig. 7 in conjunction with Figs. 1 to 3.

The perceptual hash database 800 is a non-transactional, indexed database. A plurality of data records 851, 852 are stored in the perceptual hash database 800. Each record 851, 852 designates one of a plurality of non-fungible tokens 8 that are stored in the ledger 60 of the blockchain 6. Each record 851, 852 comprises a perceptual hash 821, 822, ... and an identifier 801, 802 identifying the corresponding non-fungible token 8 that is bound to the respective perceptual hash 821, 822, .... That is perceptual hash database 800 stores identifiers 801, 802 in association with their respective perceptual hashes 821, 822. The identifiers 801, 802 may be structured in the same way as identifier 801 that was discussed with reference to Fig. 4 and Fig. 5. That is, the identifiers 801, 802 enable locating the corresponding non-fungible token 8 in the ledger 60 of the blockchain 6.

The perceptual hash database 800 is indexed by perceptual hashes. That is, the perceptual hash database 800 may be queried by perceptual hash. When queried for a given perceptual hash, perceptual hash database 800 will swiftly return a number of zero, one or more records 851, 852 that comprise perceptual hashes 821, 822 that are the same as or similar to the perceptual hash on which the query was based.

Thus, the perceptual hash database 800 can be used to quickly locate non-fungible tokens 8 based on their perceptual hashes 821, 822 for counterfeit detection purposes and the like and provides a considerable speed improvement over having to search for such non-fungible tokens 8 by traversing the ledger 60 of the blockchain 6.

Perceptual hash database 800 of Fig. 7 has applications in providing counterfeit detection to further developments of the system 1 of the first to third exemplary embodiments of Fig. 1.

In one further development of the first or second exemplary embodiment, in step S3, the respective receiving entity, such as 3D printer 51 or 3D printer 52, after having identified the non-fungible token 8 from the identifier 801 comprised in the transferred ownership proof 91, queries the perceptual hash database 800 to determine whether there are records 851, 852 identifying other non-fungible tokens having perceptual hashes 821, 822 that are similar to the perceptual hash 82 that is bound to the of the identified non-fungible token 8. If yes, the receiving entity 51, 52 concludes that more than own owning entity owns a respective non-fungible token claiming ownership of the digital asset 3 or of highly similar digital assets, and thus, at least one of the multiple non-fungible tokens having similar perceptual hashes 82, 821, 822 may be a counterfeit. In this case, the receiving entity 51, 52 fails the identification in step S3 and rejects the received file 41, 42.

Herein, as well is in the further developments discussed hereinbelow, similarity between any two perceptual hashes 82, 821, 822 may be determined using a statistical similarity measure, such as a Hamming distance or a Levenshtein distance, or the like. The compared perceptual hashes 82, 821, 822 may be determined to be similar of the statistical similarity measure is at or below a predetermined threshold.

It is noted that in this case, upon minting a non-fungible token 8, the perceptual hash 82 is preferably determined to be the average of the perceptual hashes of the individual multiple files 4, 41-44. Setting the perceptual hash 82 bound to the non-fungible token 8 to the average perceptual hash increases the likelihood that small deviations in the perceptual hash that occur naturally between different file formats will be below the threshold, while larger deviations that are due to a dissimilarity of the underlying digital asset will be above the threshold.

In another further development of the first or second exemplary embodiment, the identifier 801 of the non-fungible token 8 may be omitted from the ownership proofs 91-93 that are being transferred from the transmitting entity 2 to the receiving entities 51, 52, and the ownership proofs 91-93 may only comprise respective hash lists. In this case, upon receiving the transferred file 41, 42 in step S1, the respective receiving entity 51, 52 may calculate a perceptual hash from the received file 41, 42 and may use the calculated perceptual hash to query the perceptual hash database 800 for any matching records 851, 852 having perceptual hashes 821, 822 that are similar to the calculated perceptual hash. If there is exactly one matching record, such as record 852, the receiving entity 451, 52 identifies the non-fungible token 8 based on the identifier 802 that is associated with the matching perceptual hash 822 in record 852. That is, the non-fungible token 8 to use for the further identification steps in step S3 may be determined solely based on a perceptual hash of the received file 71. Furthermore, if there is more than one matching record, such as if both records 851, 852 match, the receiving entity 51, 52 may conclude that at least one of the non-fungible tokens 8 identified by the respective identifiers 801, 802 of the matching records 851, 852 may be a counterfeit, and may fail the identification of step S3 and reject the received file 41, 42.

In a further development of the third exemplary embodiment, counterfeit detection may be performed by the blockchain 6 at the time when new non-fungible tokens are minted.

That is, the smart contract 611 that is called to cause the minting of the nun-fungible token 8 in step S14 may be configured query the perceptual hash database 800 for the perceptual hash 82 of the non-fungible token 8 to be minted, and to accept the minting of the non-fungible token 8 only on the condition that a response received from perceptual hash database 800 indicates that the blockchain 6 (the smart contract 611 and/or further smart contracts that also provide non-fungible tokens) does not contain any other non-fungible token bound to a perceptual hash that is similar to the perceptual hash 82 of the non-fungible token 8 to be minted.

In this way, counterfeited non-fungible tokens are prevented from being minted ab initio, so that trust is advantageously increased.

There are various ways to ensure that the perceptual hash database 800 is in sync with the ledger 60 of the blockchain 6, i.e., that its records 851, 852 accurately describe which non-fungible tokens 8 are part of the ledger 60.

According to one further development, a helper script executing in periodical intervals on a device, such as on one of the node devices 61, 62, 63, or an external device (non-shown) that has access to the blockchain 6, may scan the ledger for non-fungible tokens, and may, for any identified non-fungible token 8 that adheres to the structure disclosed herein, add a corresponding record 851, 852 to the perceptual hash database 800.

According to another further development, the blockchain 6 may cause the perceptual hash database 800 to be updated automatically whenever a new non-fungible token 8 is minted. For example, in the third exemplary embodiment, the smart contract 611, that is called to cause the minting of the nun-fungible token 8 may, if the token is minted successfully, cause a new record 851, 852 to be created in the perceptual hash database 800, wherein, in the new record 851, 852, the perceptual hash 821, 822 of the newly minted non-fungible token 8 is associated with an identifier 801 of the newly-minted non-fungible token 8.

The perceptual hash database 800 may be provided as a trusted perceptual hash database of the system 1 in various ways.

According to one further development, the trusted perceptual hash database 800 is pre-agreed and is provided by a (non-shown) computing device or cloud that is part of the system 1 and which is trusted by the parties operating the system 1.

According to another further development, each smart contract 611 may specify perceptual hash database 800 that it trusts and that is to be used, e.g. by the receiving entity 51, 52, for performing counterfeit detection. For example, smart contract 611 may provide an API endpoint for calling the perceptual hash database 800.

According to yet another further development, each entity that wishes to perform counterfeit detection, such as the receiving entities 51, 52, may comprise a respective node device 61-63 of the blockchain 6, may thus have its personal copy of the ledger 60 stored thereon, and may further comprise a respective private perceptual hash database 800 that it trusts and that is used for fast queries in the copy of the ledger 60. In this way, no trust to any externally provided perceptual hash database is required, and the respective entity can fully trust the perceptual hash database 800 because it operates under its own full control.

Although the present invention has been described in accordance with preferred embodiments, it is obvious for the person skilled in the art that modifications are possible in all embodiments.

The variants and further developments described hereinabove can be combined freely with any of the first to third exemplary embodiments and/or with each other, as long as no contradiction occurs.

In the first and second exemplary embodiment, for step S3, a challenge-response based authentication between the 3D printer 51 and the industrial PC 2 was described as a means for the 3D printer 51 (receiving entity) confirming the identity of the industrial PC2 (transmitting entity) as being the owner of the non-fungible token 8.

However, in another exemplary embodiment, it is conceivable that as part of steps S1 and/or S2, the industrial PC 2 uses its wallet 71 to perform a transaction on the blockchain 6 in which ownership of the non-fungible token 8 is transferred from the industrial PC 2 (its wallet 71) to the 3D printer 51 (its wallet 72). In this case, when step S3 is performed, the receiving entity 51 has already assumed ownership of the non-fungible token 8. Confirming the identity of the transmitting entity 2 as being the (former) owner of the non-fungible token 8 in step S3 may then be considered a no-operation, because the transmitting entity 2 could not have transferred ownership of the non-fungible token 8 to the receiving entity 51 via the blockchain 6 if it would not have been the original owner. Als in this case, the identifier 801 of the non-fungible token 8 can be omitted from the ownership proof 91, 93 that is transmitted in step S2, because the receiving entity 51 already knows the identity of the non-fungible token 8.

For the third exemplary embodiment, two alternative ways of binding the cryptographic root hash 81 and the perceptual hash 82 to the non-fungible token 8 are discussed. The skilled person appreciates that the other variant of binding, in which the non-fungible token 8 comprises an URI pointing to a JSOIN file or the like from which the hashes can be obtained, can also be used with the first and second exemplary embodiment.

For the first and second exemplary embodiments, it was described that in step S1, the file 41 is transmitted from the transmitting entity 2 to the receiving entity 51. However, it is conceivable that the non-fungible token 8 contains, as payload data, an URI that points to a JSON file which comprises, as key-value pairs, one or more further URIs indicating from where the multiple files 4 can be downloaded. In this case, step S1 of transferring the file 4 from the transmitting entity 2 to the receiving entity 51 may also be embodied by the receiving entity 51 fetching the required file 41 from the URI that it retrieves from the non-fungible token 8, and no direct transmission of file 41 from the transmitting entity 2 to the receiving entity 51 is required.

Throughout this specification, for ease of understanding, reference has been made to the Ethereum blockchain and to specific Ethereum standards. However, it will be appreciated that the teachings of the present specification are applicable to any distributed transactional database technology that supports smart contracts and non-fungible tokens. Other examples of suitable distributed transactional database technologies include Flow, Cardano, Solana, EOS, WAX, Tron, Binance Smart Chain and Bitcoin, or any sidechains thereof. Moreover, the distributed transactional database does not need to be the public ledger of the aforementioned well-known blockchains. Rather, in an Industry 4.0 scenario, advantageously, a private blockchain may be set up that uses one of the aforementioned technologies, but is formed in its entirety by computing nodes operated by the various industrial operating parties that participate in the Industry 4.0 scenario, but have limited trust in each other, such as various OEMs and the like.

Throughout the description of the figures, 3D printers 51, 52 were disclosed as examples of a receiving entity, and an industrial PC 2 was disclosed as an example of a transmitting entity, and three-dimensional models 3 were disclosed as examples for a digital asset that can be represented by multiple files having different file formats. However, these are mere non-limiting examples. The principles taught by the present specification can be applied to most various industrial scenarios with arbitrary kinds of digital assets, as long as there exists a method to derive a perceptual hash from the chosen kind of digital asset and the digital asset can be represented by files having different file formats. For example, the digital asset could also be a two-dimensional product image, an audio recording, a video recording, or the like.

The perceptual hash 82 included in the non-fungible token 8 is not only suitable for counterfeit detecting. The perceptual hash 82 may also be used for quality control of the manufacturing apparatuses, such as the 3D printers 51, 52. For example, upon manufacturing an article to be manufactured according to the manufacturing specification comprised in the received file 41, the respective 3D printer 51, 52 may acquire an image of the manufactured article; calculate a perceptual hash of the acquired image; and determine whether the manufactured article was manufactured correctly based on a comparison between the calculated perceptual hash and the perceptual hash 82 bound to the non-fungible token 8.

In any term that designates an individual, such as an operator, and the like, independent of the grammatical term usage, individuals with male, female or other gender identities are included within the term.

## Claims

1. A computer-implemented method of providing one (41, 42) of multiple files (4) having different file formats and each representing a same digital asset (3) from a transmitting entity (2) to a receiving entity (51, 52), the method comprising:
a) transferring (S1) the one file (41, 42) from the transmitting entity (2) to the receiving entity (51, 52);
b) transferring (S2) an ownership proof (91-93) for the transferred file (41, 42) from the transmitting entity (2) to the receiving entity (51, 52); and
c) the transmitting entity (2) identifying itself to the receiving entity (51, 52) as being the owner of the digital asset (3) represented by the transferred file (41, 42) using the transferred ownership proof (91-93) and a non-fungible token (8) that is stored in a distributed transactional database (6) and that represents the digital asset (3), wherein the non-fungible token (8) is bound to:
- a cryptographic root hash (81) of a Merkle tree (9) formed based on cryptographic hashes (911-914) of each of the multiple files (4); and
- a perceptual hash (82) calculated using at least one of the multiple files (4), and
wherein the ownership proof (91-93) comprises at least portions of the Merkle tree (9) that are sufficient for calculating the cryptographic root hash (81) based on a cryptographic hash of the transferred file (41, 42).

2. The method according to claim 1,
wherein the receiving entity (51, 52) rejects the received file (41, 42) if the identification in step c) fails.

3. The method according to claim 1 or 2,
wherein the perceptual hash (82) is an average of perceptual hashes of each of the multiple files (4).

4. The method according to one of claims 1 to 3,
wherein step c) comprises:
- the receiving entity (51, 52) confirming an identity of the transmitting entity (2) as being the owner of the non-fungible token (8);
- the receiving entity (51, 52) confirming an integrity of the transmitted file (41, 42) as being one of the multiple files (4) representing the digital asset (3) that is represented by the non-fungible token (8); and
- failing the identification in step c) if at least one of said confirming steps fails.

5. The method according to claim 4,
wherein the receiving entity (51, 52) confirms the identity of the transmitting entity (2) as being the owner of the non-fungible token (8) based on one of:
- the transmitting entity (2) transferring ownership of the non-fungible token (8) to the receiving entity (51, 52) using a transaction in the distributed transactional database (6); and
- the transmitting entity (2) proofing its ownership of the non-fungible token (8) to the receiving entity (51, 52) using challenge-response authentication.

6. The method according to one of claims 1 to 5,
wherein the ownership proof (93) comprises, as the sufficient portions of the Merkle tree (9): for each layer (910, 920, 930) of the Merkle tree (9), a cryptographic hash of each sibling node of the node that corresponds to the transmitted file (41, 42) on the respective layer (910, 920, 930).

7. The method according to one of claims 1 to 6,
wherein step c) further comprises:
- the receiving entity (51, 52) calculating a perceptual hash of the file (41, 42) received in step a), and
- the receiving entity (51, 52) failing the identification in step c) if the distributed transactional database (6) contains more than one non-fungible token bound to a perceptual hash (81) that is similar to the calculated perceptual hash of the received file (41, 42).

8. The method according to one of claims 1 to 7,
further comprising:
- the receiving entity (51, 52) calculating a perceptual hash of the file (41, 42) received in step a), and
- if the distributed transactional database (6) contains exactly one non-fungible token (8) bound to a perceptual hash (82) that is similar to the calculated perceptual hash of the received file (41, 42), using said exactly one non-fungible token (8) by the receiving entity (51, 52) for the identification in step c).

9. The method according to one of claims 1 to 8,
further comprising minting (S14) the non-fungible token (8) in the distributed transactional database (6),
wherein the distributed transactional database (5) accepts minting of the non-fungible token (8) on the condition that the distributed transactional database (6) does not contain another non-fungible token bound to a perceptual hash that is similar to the perceptual hash (82) of the non-fungible token (8) to be minted.

10. The method according to one of claims 7 to 9,
wherein,
in order to determine one or more non-fungible tokens (8) that are stored in the distributed transactional database (6) and that are bound to a similar perceptual hash, a trusted perceptual hash database (800) is queried in which identifiers (801, 802) of the non-fungible tokens comprised in the distributed transactional database (6) are stored in association with respective perceptual hashes (821, 822) of the respective non-fungible tokens (8).

11. The method according to claim 10,
wherein the distributed transactional database (6), upon accepting minting of a non-fungible token (8), stores an identifier (801, 802) of the non-fungible token (8) in association with the perceptual hash (82) bound to the non-fungible token (8) in the trusted perceptual hash database (800) .

12. The method according to one of claims 7 to 11,
wherein a decision whether the perceptual hashes are similar is made when a statistical similarity measure is lower than a predetermined threshold.

13. A computer program product comprising a program code for executing the method of one of claims 1 to 12 when run on at least one computer.

14. A manufacturing apparatus (51, 52) configured to receive a file (41, 42) that comprises a manufacturing specification of an article to be manufactured according to the method of one of claims 1 to 12, wherein the manufacturing apparatus (51, 52) is configured to act as the receiving entity (51, 52), and is further configured to manufacture the article to be manufactured only if the transmitting entity (2) is successfully identified as the owner of a digital asset (3) that is represented by the received file (41, 42) in step c).

15. A communication system (1) comprising a transmitting entity (2), a receiving entity (51, 52) and a distributed transactional database (6), wherein the transmitting entity (2) and the receiving entity (51, 52) are configured to:
a) transfer (S1) the one file (41, 42) from the transmitting entity (2) to the receiving entity (51, 52);
b) transfer (S2) an ownership proof (91-93) for the transferred file (41, 42) from the transmitting entity (2) to the receiving entity (51, 52); and
c) perform (S3) an identification in which the transmitting entity (2) is identified to the receiving entity (51, 52) as being the owner of the digital asset (3) represented by the transferred file (41, 42) using the transferred ownership proof (91-93) and a non-fungible token (8) that is stored in a distributed transactional database (6) and that represents the digital asset (3),
wherein the non-fungible token (8) is bound to:
- a cryptographic root hash (81) of a Merkle tree (9) formed based on cryptographic hashes (911-914) of each of the multiple files (4); and
- a perceptual hash (82) calculated using at least one of the multiple files (4), and
wherein the ownership proof (91-93) comprises at least portions of the Merkle tree (9) that are sufficient for calculating the cryptographic root hash (81) based on a cryptographic hash of the transferred file (41, 42).
